# EUROPEAN PATENT APPLICATION

(11) **EP 4 826 880 A1**
(43) Date of publication of application: **21.10.2026**
(21) Application number: 24903544.5
(22) Date of filing: 02.12.2024
(51) Int. Cl.: H01M 50/284, H01M 50/213, H01M 50/503, H01M 50/507, H01M 50/516, H01M 50/519

(54) **BATTERY PACK AND METHOD FOR REPLACING SECONDARY BATTERY CELL THEREOF**

(30) Priority: 13.12.2023 JP 2023210222
(71) Applicant: Panasonic Intellectual Property Management Co., Ltd., Kadoma-shi, Osaka 571-0057 (JP)
(72) Inventor: SHUKE, Takeshi, Kadoma-shi, Osaka 571-0057 (JP); FUKUDA, Shinsuke, Kadoma-shi, Osaka 571-0057 (JP); OSHIMA, Yasufumi, Kadoma-shi, Osaka 571-0057 (JP)
(74) Representative: Eisenführ Speiser
(86) International application number: PCT/JP2024/042542
(87) International publication number: WO 2025/126886

(57) **Abstract**

A method includes steps of: cutting a first lead connection tab of at least one of first lead plates; removing the first lead plate from a battery holder and extracting, from the battery holder, one or more secondary battery cells connected to the first lead plate among a plurality of secondary battery cells; inserting another secondary battery cell into a portion of the battery holder from which the one or more secondary battery cells have been extracted and connecting a second lead plate to an end face of the other secondary battery cell; and connecting a second lead connection tab, provided on a portion of the second lead plate and disposed off-center so as not to overlap with a position corresponding to the first lead connection tab of the first lead plate, to a blank region that is wider than the width of the first lead connection tab and that is free of the first lead connection tab.

## Description

### TECHNICAL FIELD

The present disclosure relates to a battery pack and a method for replacing a secondary battery cell thereof.

### BACKGROUND ART

Battery packs that contain a large number of secondary battery cells connected in series or in parallel are used for various power sources, including an electric power source for power assisted bicycles and a power source for portable electric appliances such as electric cleaners and electric power tools, or in stationary-type electricity storage applications, such as backup power sources for servers, and home-use, office-use, or factory-use power supply devices, and further, drive power sources for vehicles, such as electric scooters, electric carts, hybrid electric vehicles, and battery electric vehicles.

On the other hand, from the viewpoints of reducing environmental impact and achieving sustainable society, there is a demand for products designed with recycling, reusing, and reducing of resources in mind. For battery packs as well, there is a need for designs that make possible reuse of available components and replacement of deteriorated parts.

A problem with conventional battery packs is, however, that they are difficult to reuse. For example, in order to remove and replace some of the secondary battery cells that are welded by laser welding or the like from the battery holder, the lead plate needs to be cut off. When it is attempted to weld a new secondary battery cell to a new lead plate in this state, part of the cut-off lead plate remains and becomes an obstacle, so it is unable to provide sufficient space for welding.

### CITATION LIST

### Patent Literature

PTL 1: Japanese Patent No. 7295096

### SUMMARY

It is an object of the present disclosure to provide a battery pack in which secondary battery cells are replaceable, and to provide a method for replacing the secondary battery cells. It is another object of the disclosure to provide a battery pack in which, even when part of a lead plate remains, welding of another lead plate is possible, and to provide a method for replacing secondary battery cells thereof. It should be noted that the description of these objects and problems in the present disclosure does not mean to exclude the presence of other objects and problems. In addition, one embodiment of the present disclosure does not need to solve all of the problems. Furthermore, it is possible to identify other problems from the description, drawings, and claims of the present disclosure.

A battery pack according to one embodiment of the present disclosure includes:
a plurality of secondary battery cells each including an end face; a battery holder housing the plurality of secondary battery cells;
a plurality of first lead plates connected to end faces of the plurality of secondary battery cells housed in the battery holder, each of the plurality of first lead plates including a first lead connection tab disposed in a portion thereof; and
a circuit board including a plurality of connection regions each connected to the first lead connection tab of a corresponding one of the plurality of first lead plates, wherein
each of the plurality of connection regions has a width greater than a width of the first lead connection tab, and
each of the plurality of connection regions includes a blank region that is connected to a second lead connection tab in a state where the first lead connection tab is connected to the connection region, the second lead connection tab being different from the first lead connection tab.

A battery pack according to another embodiment includes:
a plurality of secondary battery cells each including an end face;
a battery holder housing the plurality of secondary battery cells;
a plurality of first lead plates each connected to end faces of the plurality of secondary battery cells housed in the battery holder, each of the plurality of first lead plates including a first lead connection tab disposed in a portion thereof; and
a circuit board including a plurality of connection regions each connected to the first lead connection tab of a corresponding one of the plurality of first lead plates, wherein
each of the plurality of connection regions has a width of greater than or equal to 1.7 times a width of the first lead connection tab, and
each of the plurality of connection regions includes a blank region that is free of the first lead connection tab and that is wider than a width of the first lead connection tab, in a state where the first lead connection tab is connected to the connection region.

According to further another embodiment, a method for replacing a secondary battery cell of a battery pack includes:
preparing a battery pack including:
   a plurality of secondary battery cells each including an end face,
   a battery holder housing the plurality of secondary battery cells,
   a plurality of first lead plates each connected to end faces of the plurality of secondary battery cells housed in the battery holder, each of the plurality of first lead plates including a first lead connection tab disposed in a portion thereof, and
   a circuit board including a plurality of connection regions each connected to the first lead connection tab of a corresponding one of the plurality of first lead plates, each of the plurality of connection regions having a width of greater than or equal to 1.7 times a width of the first lead connection tab;
cutting the first lead connection tab of at least one of the plurality of first lead plates to leave a blank region that is free of the first lead connection tab and that is wider than a width of the first lead connection tab, in a state where the first lead connection tab is connected to the connection region;
removing the first lead plate from the battery holder and extracting, from the battery holder, one or more secondary battery cells connected to the first lead plate among the plurality of secondary battery cells;
inserting another secondary battery cell into a portion of the battery holder from which the one or more secondary battery cells have been extracted to connect a second lead plate to an end face of the other secondary battery cell; and
connecting a second lead connection tab to the blank region, the second lead connection tab being provided on a portion of the second lead plate, the second lead connection tab being disposed off-center so as not to overlap with a position corresponding to the first lead connection tab of the first lead plate.

With the just-described battery pack, when the first lead plate is cut off to be replaced with a new lead plate from the state where the first lead connection tab of the first lead plate is secured to the connection region, it is possible to secure the lead connection tab of the new lead plate to a region within the connection region that does not overlap the first lead connection tab of the old first lead plate.

Moreover, with the just-described method for replacing a secondary battery cell of a battery pack, when the first lead plate is cut off and replaced with a new lead plate from the state where the first lead connection tab of the first lead plate is secured to the connection region, it is possible to secure the second lead connection tab of the second lead plate to the blank region within the connection region that does not overlap the first lead connection tab of the first lead plate, so that connection reliability of the second lead connection tab can be maintained.

### BRIEF DESCRIPTION OF THE DRAWINGS

Fig. 1 is a perspective view illustrating a battery pack according to a first exemplary embodiment.
Fig. 2 is an exploded perspective view of the battery pack of Fig. 1.
Fig. 3 is a plan view illustrating a first lead plate overlaid on a second lead plate.
Fig. 4 is an enlarged perspective view illustrating a primary part of the battery pack shown in Fig. 1.
Fig. 5 is an enlarged perspective view illustrating how a first lead connection tab shown in Fig. 3 is connected to a connection region.
Fig. 6 is a perspective view illustrating a battery pack according to Comparative Example.
Fig. 7 is an enlarged perspective view illustrating the battery pack of Fig. 6 in which a portion of the lead plate is cut off.
Fig. 8 is an exploded perspective view illustrating the battery pack of Fig. 1 from which one of the first lead plates is detached.
Fig. 9 is an exploded perspective view illustrating how a second lead plate is secured from the state shown in Fig. 8.
Fig. 10 is a perspective view illustrating how a second lead connection tab is secured from the state shown in Fig. 9.
Fig. 11 is an enlarged perspective view illustrating a primary part of the battery pack shown in Fig. 10.
Fig. 12 is an enlarged perspective view illustrating a primary part of a battery pack according to a modified example.
Fig. 13 is a perspective view illustrating a battery pack according to a second exemplary embodiment.
Fig. 14 is an enlarged perspective view illustrating a primary part of the battery pack shown in Fig. 13.
Fig. 15A is a schematic view illustrating an example of the position at which the first lead connection tab of Fig. 14 is to be cut.
Fig. 15B is a schematic view illustrating another example of the position at which the first lead connection tab of Fig. 14 is to be cut.
Fig. 16 is an enlarged perspective view illustrating a primary part of a battery pack according to a third exemplary embodiment.
Fig. 17 is an exploded perspective view illustrating a battery pack according to the third exemplary embodiment.
Fig. 18 is an exploded perspective view illustrating a battery pack according to a fourth exemplary embodiment.

### DESCRIPTION OF EMBODIMENTS

Embodiments of the present disclosure may be embodied by the following configurations and features.

A battery pack according to another embodiment of the present disclosure is the battery pack as in the foregoing embodiments that further includes a second lead plate being connected to the end face of at least one of the plurality of secondary battery cells housed in the battery holder and including a second lead connection tab in a portion thereof, and wherein the second lead connection tab is disposed off-center so as not to overlap a position corresponding to the first lead connection tab of the first lead plate and is connected to the blank region. The just-described configuration makes it possible to secure the second lead connection tab to a position different from the first lead connection tab when removing some of the first lead plates and replacing them with second lead plates, to thereby maintain connection reliability of the second lead connection tab.

A battery pack according to another embodiment is the battery pack as in any one of the foregoing embodiments, wherein the first lead plate includes a first base part and the first lead connection tab disposed on a portion of the first base part; the second lead plate includes a second base part and the second lead connection tab disposed on a portion of the second base part; and the first base part and the second base part are identical in shape. With the just-described configuration, the first lead plate is replaceable with the second lead plate, and the first lead connection tab and the second lead connection tab, which connect to the circuit board, are provided offset from each other. Therefore, it is possible to secure the second lead connection tab to a position different from the first lead connection tab, so that the reliability of connection can be maintained even when the lead plates are replaced.

A battery pack according to further another embodiment is the battery pack as in any of the foregoing embodiments, wherein the second lead connection tab is disposed off-center toward the blank region. With the just-described configuration, the second lead connection tab can be connected to the circuit board in a stable manner.

A battery pack according to further another embodiment is the battery pack as in any one of the foregoing embodiments, wherein the second lead connection tab is formed narrower in width than the first lead connection tab.

A battery pack according to further another embodiment is the battery pack as in any one of the foregoing embodiments, wherein the battery holder includes a board mounting surface on which the circuit board is placed, the board mounting surface disposed on an upper surface of the battery holder, and a lead mounting surface on which the first lead plate is disposed, the lead mounting surface disposed on a side surface of the battery holder, and the board mounting surface includes a wall part holding an edge of the circuit board; the wall part includes a cut-out formed in a portion thereof and connecting to the lead mounting surface; and the cut-out has a width greater than or equal to 2 times a width of the first lead connection tab. With the just-described configuration, the first lead connection tab can be bent from the lead mounting surface so as to be allowed to have access to the board mounting surface via the cut-out, and can be secured to the connection region on the circuit board placed on the board mounting surface. Moreover, because the width of the cut-out is made wider, an unused region is sufficiently provided even in the state where the first lead plate is secured. So, when a new lead plate is attached, it is possible to have access from the lead mounting surface to the board mounting surface and to secure the lead connection tab of the new lead plate to the connection region.

A battery pack according to yet another embodiment is the battery pack as in any one of the foregoing embodiments, wherein a gap is formed between the first lead connection tab and the circuit board in a state where the first lead connection tab is bent toward the board mounting surface through the cut-out. The just-described configuration provides the advantage of making it easier to cut the lead connection tab through the gap.

A battery pack according to yet another embodiment is the battery pack as in any of the foregoing embodiments, wherein the lead connection tab is secured to the connection region by laser welding.

A battery pack according to yet another embodiment is the battery pack as in any of the foregoing embodiments, wherein at least a portion of the connection region includes a laser weld mark.

A method for replacing a secondary battery cell of a battery pack according to yet another embodiment is the method as in any one of the foregoing embodiments, further including the step of cutting the first lead connection tab of the first lead plate to leave the blank region, and subsequently, the step of removing a portion of the first lead connection tab remaining in the connection region from the connection region.

Hereinbelow, exemplary embodiments of the present disclosure are described with reference to the drawings. It should be noted, however, that the following exemplary embodiments are merely examples for embodying the technical ideas of the present disclosure, and the present disclosure is not limited to the following exemplary embodiments. In addition, the present description is in no way provided for limiting the members shown in the claims to the members illustrated in the exemplary embodiments. Moreover, the dimensions, materials, shapes, relative arrangements, and the like of parts and elements described in the following exemplary embodiments are merely illustrative examples, and should not be construed to limit the scope of the present disclosure, unless specifically stated otherwise. Furthermore, the sizes of some elements, their positional relationships, and so forth shown in the drawings may be exaggerated for clarity in illustration. In the following description, like names and symbols refer to same or similar elements, and detailed description thereof will not be given as appropriate. Furthermore, each of the elements that constitute the present invention may be embodied by an embodiment in which one member serves as a plurality of elements so that the plurality of elements are composed of the same member, or conversely, may be achieved in such an embodiment in which the function of one member is shared among a plurality of members.

The battery pack of the present disclosure may be utilized as a power source for portable electric appliances, such as electric cleaners and electric power tools, or as a power supply device in stationary-type electricity storage applications, such as backup power sources for servers, home use, office use, and factory use power supply devices, or further, as a drive electric power source for power assisted bicycles, or as a drive power source for vehicles, such as electric scooters, electric carts, hybrid electric vehicles, and battery electric vehicles. Hereinafter, a battery pack for a power assisted bicycle is described as one exemplary embodiment of the present disclosure.

### First Exemplary Embodiment

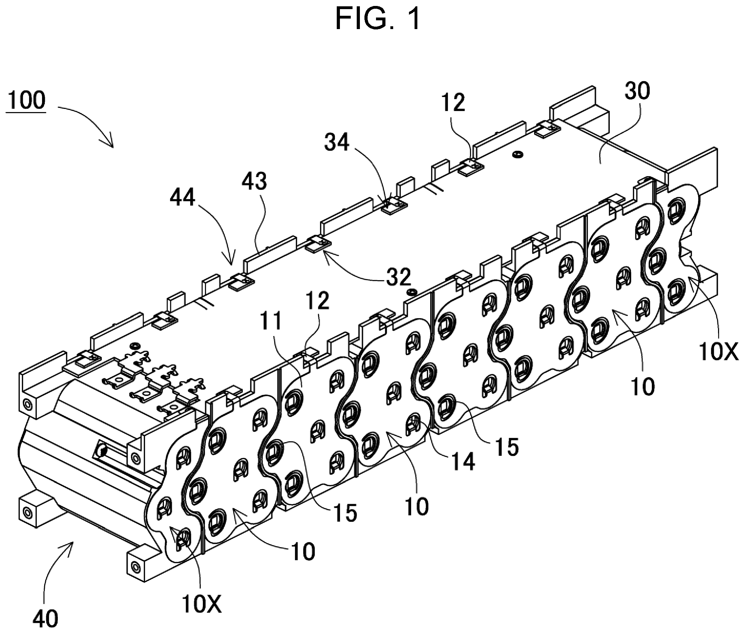

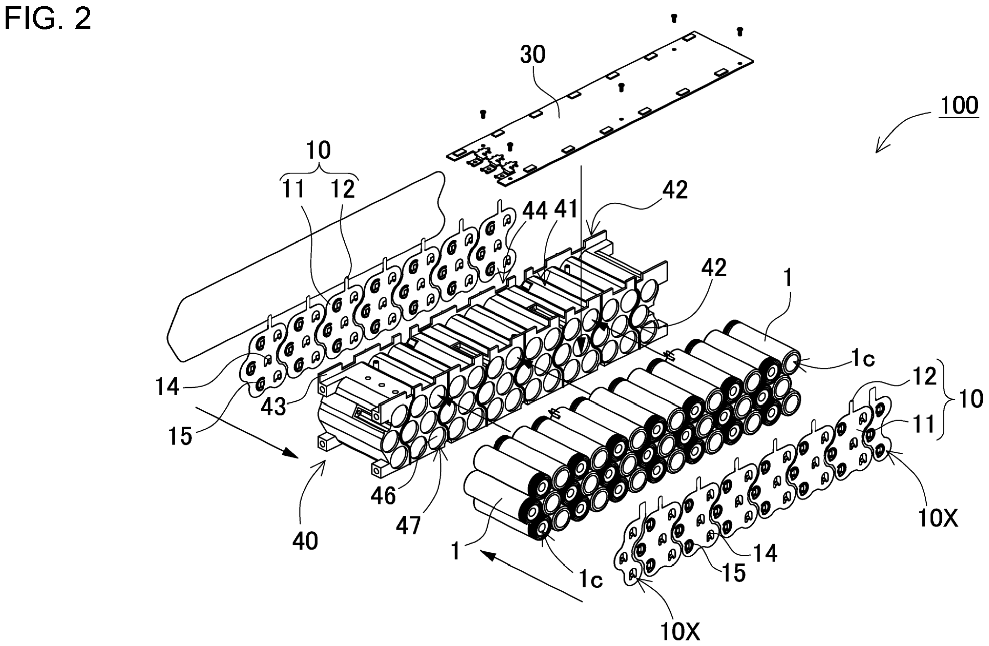

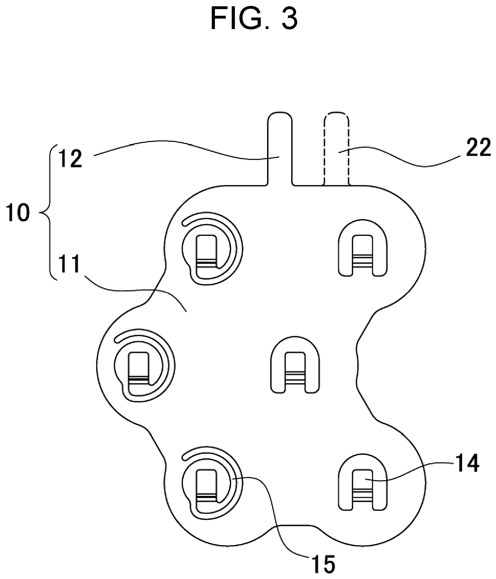

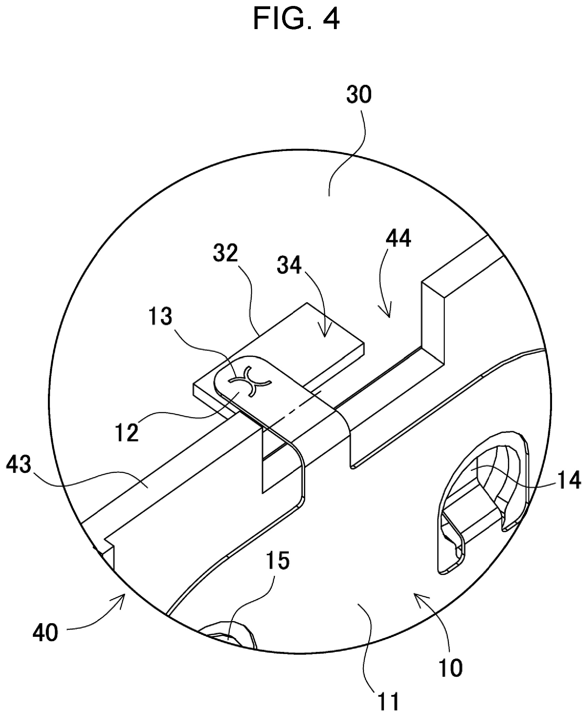

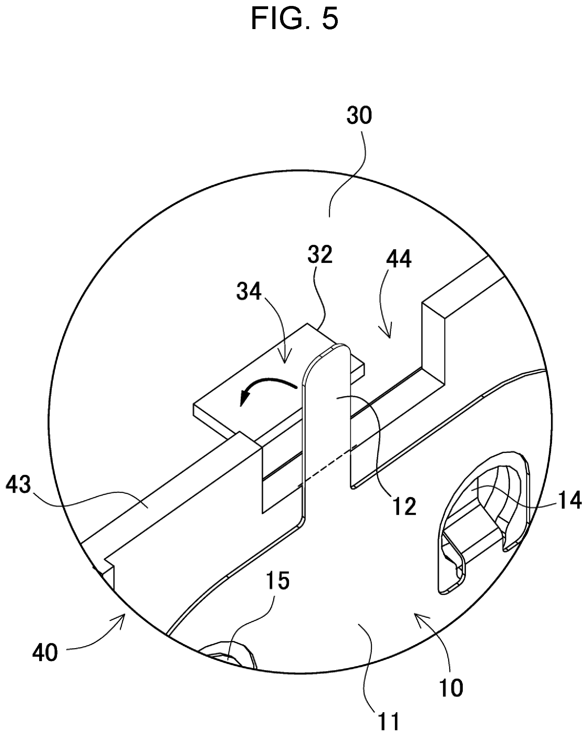

Battery pack 100 according to a first exemplary embodiment of the present disclosure is shown in Figs. 1 to 5. In these drawings, Fig. 1 shows a perspective view illustrating battery pack 100 according to the first exemplary embodiment, Fig. 2 shows an exploded perspective view illustrating battery pack 100 of Fig. 1, Fig. 3 shows a plan view illustrating first lead plate 10 overlaid on second lead plate 20, Fig. 4 shows an enlarged perspective view illustrating a primary part of battery pack 100 shown in Fig. 1, and Fig. 5 shows an enlarged perspective view illustrating how first lead connection tab 12 shown in Fig. 3 is connected to connection region 32. Battery pack 100 according to the first exemplary embodiment includes, as illustrated in Figs. 1 and 2, a plurality of secondary battery cells 1, battery holder 40, a plurality of first lead plates 10, and circuit board 30. Each of secondary battery cells 1 includes end face 1c. Battery holder 40 is provided with housing cylinders 46 for housing each of secondary battery cells 1. With each of secondary battery cells 1 inserted in a corresponding one of housing cylinders 46, first lead plate 10 is connected to end faces 1c of secondary battery cells 1. Furthermore, first lead plate 10 includes first lead connection tab 12 in a portion thereof, and first lead connection tab 12 is connected to connection region 32 of circuit board 30. Hereinbelow, further details are described.

### Secondary Battery Cell 1

A plurality of secondary battery cells 1 are arrayed in an orientation by battery holder 40 such that end faces 1c of secondary battery cells 1 are on the same plane. For each of secondary battery cells 1, it is possible to use a secondary battery cell having a cylindrical or prismatic outer shape. In the examples shown in Fig. 2 and elsewhere, cylindrically-shaped secondary battery cells 1 are disposed in a horizontal posture and arranged in a staggered arrangement. Note that the number and arrangement of the secondary battery cells are not limited to this example, but any number or arrangement may be employed as appropriate. For example, it is possible that cylindrical secondary battery cells may be arranged in a grid arrangement.

Each of secondary battery cells 1 includes positive and negative electrodes. Preferably, one of the positive electrode and the negative electrode is provided on one end face of secondary battery cell 1 and the other one is provided on the other end face. In the example shown in Fig. 2 and elsewhere, the bottom of the outer covering can of secondary battery cell 1 is used as the negative electrode. For such secondary battery cells 1, it is possible to use known secondary batteries, such as lithium-ion secondary batteries, nickel-hydride batteries, and nickel-cadmium batteries, as appropriate.

### Battery Holder 40

Battery holder 40 houses and holds a plurality of secondary battery cells 1. For this purpose, battery holder 40 is provided with a plurality of housing cylinders 46 for individually housing secondary battery cells 1. The inside of housing cylinder 46 is formed in a size such as to be able to house secondary battery cell 1. Preferably, as illustrated in Fig. 2 and elsewhere, the inside of housing cylinder 46 is formed in a cylindrical shape in which the cylindrical outer covering can of secondary battery cell 1 can be inserted so that cylindrical secondary battery cell 1 can be housed therein. In addition, it is preferable that the gap between the outer covering can of secondary battery cell 1 inserted in housing cylinder 46 and the inner surface of housing cylinder 46 be small. Allowing the outer covering can and housing cylinder 46 to make surface contact with each other enables secondary battery cell 1 to be thermally coupled to battery holder 40 and the heat generated by secondary battery cell 1 to be efficiently conducted to battery holder 40, so that the cooling effect of secondary battery cell 1 can be increased. Such battery holder 40 may be composed of resin, such as polycarbonate, polypropylene, polybutylene terephthalate, modified polyphenylene ether, ABS, PPS, and the like. It is also possible that battery holder 40 may be divided into a plurality of pieces. It is also possible that a plurality of divided battery holders 40 may be stacked horizontally or vertically.

In addition, battery holder 40 includes, on its upper surface, board mounting surface 41 on which circuit board 30 is mounted. Board mounting surface 41 includes wall part 43 that holds an edge of circuit board 30. Cut-outs 44 connecting to lead mounting surface 42 are formed in portions of wall part 43. In addition, a side face of battery holder 40 includes lead mounting surface 42 on which first lead plate 10 is disposed. In lead mounting surface 42, electrode windows 47 communicating with housing cylinders 46 are opened, to allow first lead plates 10 disposed on the outer surface end of battery holder 40 to connect to the terminals of secondary battery cells 1.

### First Lead Plate 10

On lead mounting surface 42 of battery holder 40, a plurality of first lead plates 10 are disposed, and ribs for insulation and positioning are formed between adjacent first lead plates 10. As illustrated in Figs. 1 and 2, for example, first lead plate 10 connects the electrodes on end faces 1c of secondary battery cells 1 to each other, to connect a plurality of secondary battery cells 1 in parallel or in series. The number of series connections or parallel connections may be set as appropriate according to the required specifications. In the example shown in Fig. 1 and elsewhere, battery pack 100 uses a total of 42 secondary battery cells 1, to form a 14 series × 3 parallel arrangement.

Fig. 3 shows a plan view of first lead plate 10. As illustrated in this figure, first lead plate 10 includes first base part 11 and first lead connection tab 12 disposed on a portion of this first base part 11. First base part 11 constitutes the main surface of first lead plate 10, and is provided with a plurality of securing tabs 14 to be connected to end faces 1c of secondary battery cells 1. First lead connection tab 12 is connected to connection region 32 of circuit board 30, as illustrated in Fig. 4 and elsewhere. It should be noted that not all of first lead plates 10 necessarily have the same shape but may have varying shapes depending on their positions on lead mounting surface 42. In the example shown in Fig. 1 and elsewhere, first lead plates 10X that are disposed on the left and right ends of each lead mounting surface 42 are formed to be smaller while first lead plates 10 that are in the middle are formed to be larger.

In each of first lead plates 10, securing tabs 14 protruding from a plurality of locations of first base part 11 are secured and electrically connected to end faces 1c of secondary battery cells 1 by a known method, such as spot welding, laser welding, resistance welding, and ultrasonic welding. These first lead plates 10 may be made of a metal plate that shows excellent electrical conductivity, such as aluminum plate, nickel plate, or copper plate. In addition, first base part 11 may be provided with fuse link 15 that interrupts electric current by melting in response to overcurrent, as a path to each securing tab 14. Fuse link 15 is provided on one of the electrodes of secondary battery cell 1. In the example shown in Fig. 1 and elsewhere, three securing tabs 14 are arranged in a vertical direction so as to be offset vertically in first base part 11 of each of first lead plates 10 so that fuse links 15 are provided alternately. Note that the arrangement of fuse links 15 is not limited to this example.

### First Lead Connection Tab 12

First lead plate 10 also includes first lead connection tab 12 provided on a portion of first base part 11. As illustrated in Fig. 4, first lead plate 10 is connected to circuit board 30 via first lead connection tab 12. First lead connection tab 12 is formed extending from a portion of the upper end of first base part 11, as illustrated in the plan view of Fig. 3. First lead connection tab 12 is preferably formed integrally with first base part 11. As illustrated in Figs. 2 and 5, first lead plate 10 allowing first lead connection tab 12 to protrude in the same plane as first base part 11 is disposed on lead mounting surface 42 of battery holder 40, and under this condition, first lead connection tab 12 is bent at the position indicated by the dash-dotted line in Fig. 4 to bring first lead connection tab 12 into contact with connection region 32 of circuit board 30. Under this condition, first lead connection tab 12 is secured to connection region 32.

It is also possible that first lead connection tab 12 may be made into a bent condition in advance relative to first base part 11.

### Circuit Board 30

The plurality of secondary battery cells 1 are connected to circuit board 30 through first lead plates 10 and bus bars. Circuit board 30 includes a charge-discharge circuit for charging and discharging secondary battery cells 1, a protective circuit for monitoring the voltage and temperature of secondary battery cells 1 and cutting off electric current in the event of a fault, and the like mounted thereon. Circuit board 30 may be made of glass epoxy substrate, for example. It is also possible that a board holder may be provided as a member for holding circuit board 30, as a separate member.

### Connection Region 32

As illustrated in Figs. 1 and 2, circuit board 30 includes a plurality of connection regions 32 each connected to first lead connection tab 12 of a corresponding one of the plurality of first lead plates 10. Connection regions 32 are made of a metallic material, such as nickel, copper, or aluminum so that they can be electrically and mechanically connected to first lead connection tabs 12 by means of welding or the like. Connection regions 32 may be made into a plate shape with a metal plate, or alternatively formed into a foil shape using a pattern. First lead connection tab 12 is connected to each of connection regions 32 using a known connection technique, such as laser welding, spot welding, resistance welding, ultrasonic welding, or the like. Note that in the present disclosure, the terms "connecting" and "welding" are meant to also include soldering as well as securing by brazing bonding, in addition to laser welding, ultrasonic welding, and the like. In the example shown in Fig. 4 and elsewhere, laser welding is used to secure first lead connection tab 12 to connection region 32, so X-shaped laser weld mark 13 is left on first lead connection tab 12.

The width of each of connection regions 32 is set to be greater than or equal to 1.7 times the width of first lead connection tab 12. Preferably, the width of each of connection regions 32 is set to be greater than or equal to 2 times the width of first lead connection tab 12. In addition, as illustrated in Fig. 4, connection region 32 includes blank region 34 that is free of first lead connection tab 12 and that is wider than the width of first lead connection tab 12, in the state where first lead connection tab 12 is connected to connection region 32. When first lead plate 10 is cut off to be replaced with a new lead plate from the condition where first lead connection tab 12 of first lead plate 10 is secured to connection region 32, such a configuration enables a lead connection tab of the new lead plate to be secured to a region within connection region 32 that does not overlap first lead connection tab 12 of old first lead plate 10.

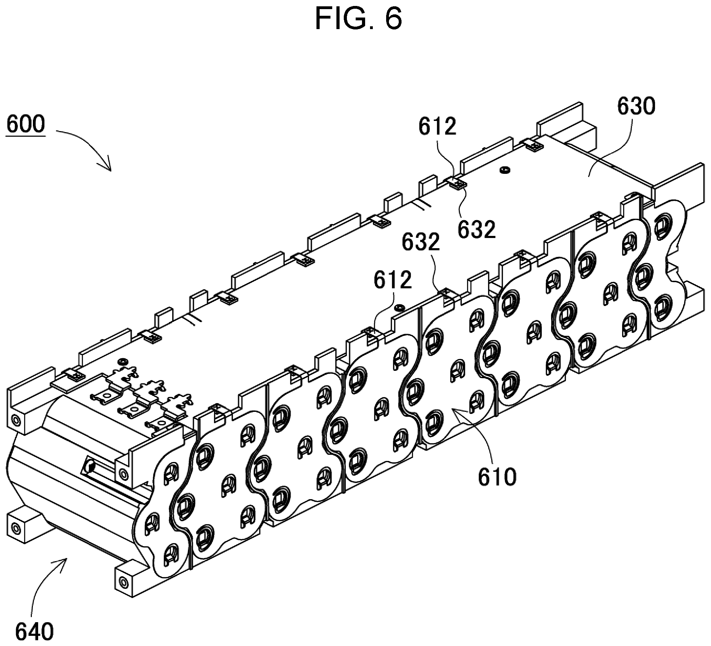

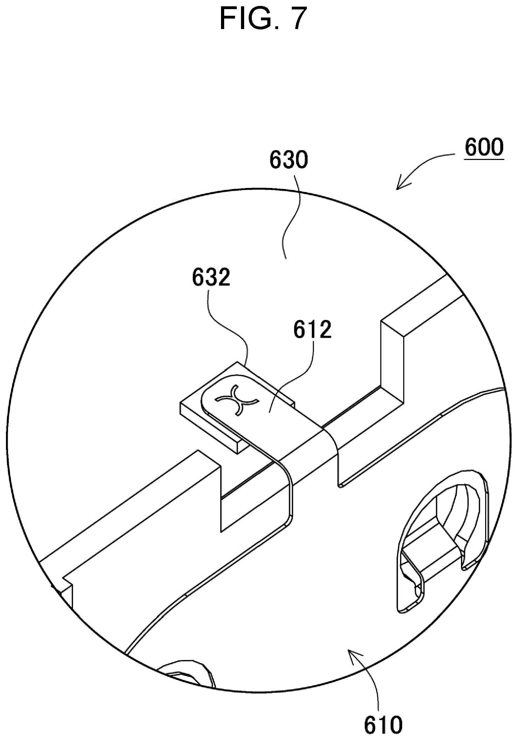

As a battery pack includes a plurality of secondary battery cells and the like, there is a demand for a mechanism that enables reusing of usable parts and replacement of deteriorated parts, considering recycling, reusing, and reducing of resources, from the viewpoint of reducing environmental impact and achieving sustainable society. A problem with conventional battery packs is, however, that they are difficult to reuse. Specifically, in the battery pack shown as a comparative example, the terminals of the secondary battery cells are welded to lead plates 610 while the secondary battery cells are housed in battery holder 640, as illustrated in Fig. 6. In addition, in order to detect the intermediate potential of the battery blocks, upper ends 612 of lead plates 610 are welded to connection regions 632 of circuit board 630. In such battery pack 600, one or more secondary battery cells may undergo deterioration due to use. In this case, if the one or more deteriorated secondary battery cells are replaced, the battery pack can continue to be used and the lifetime of the device can be prolonged; however, in conventional battery packs, replacing the secondary battery cells is not easy. Specifically, in order to remove some or all of the secondary battery cells contained in battery pack 600 from battery holder 640 to replace them, it is necessary to cut off lead plates 610. As a consequence, as illustrated in Fig. 7, upper end 612 of lead plate 610 that is cut off remains laser-welded on connection region 632 of circuit board 630.

If, under this condition, it is attempted to replace some of secondary battery cells in battery holder 640 and to weld the upper end of new lead plate 610 to circuit board 630 in the state where each of end faces 1c of the secondary battery cells is welded to new lead plate 610, the upper end of the new lead plate needs to be laser welded on top of upper end 612 of remaining lead plate 610. In this state, it is feared that the reliability of laser welding reduces.

### Blank Region 34

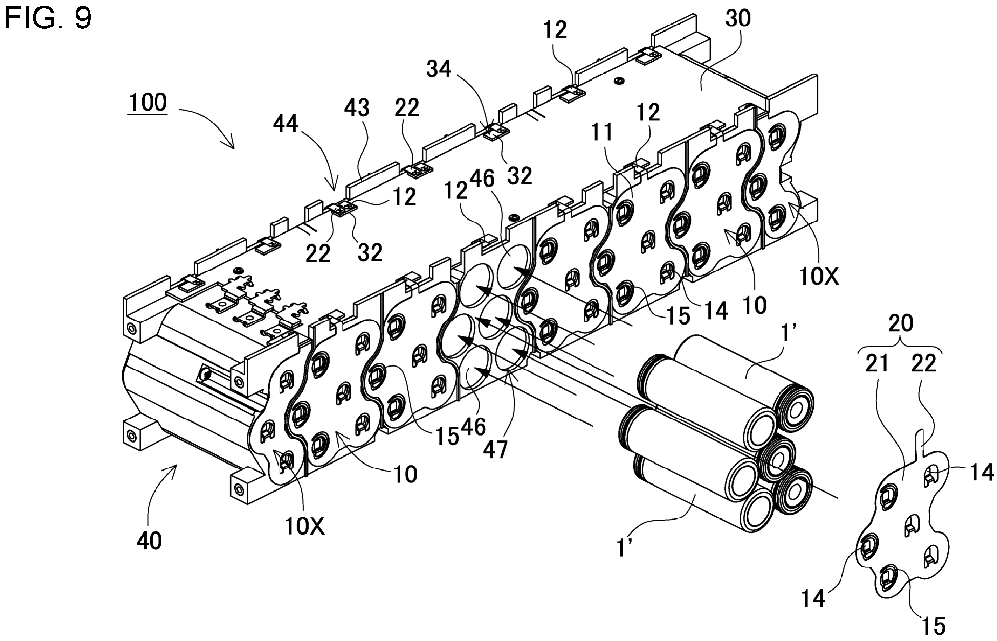

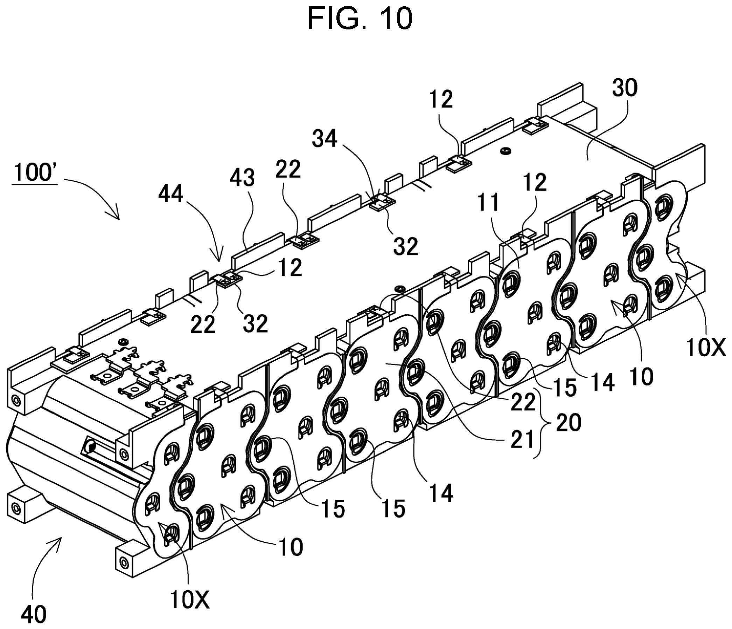

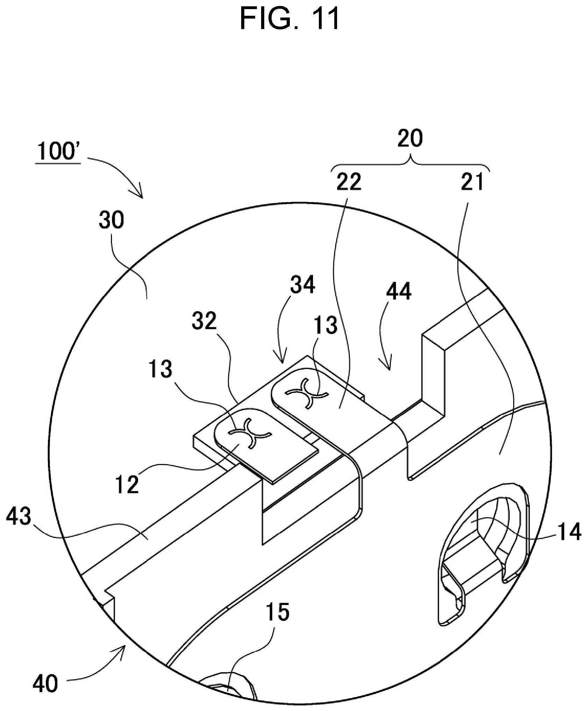

On the other hand, as described above, battery pack 100 according to the first exemplary embodiment can reconstruct battery pack 100' shown in Fig. 10 from battery pack 100 of Fig. 1 by allowing connection region 32 to have a width greater than or equal to 1.7 times, preferably greater than or equal to 2 times, the width of first lead connection tab 12. Specifically, as illustrated in Fig. 4 and elsewhere, blank region 34 that is free of first lead connection tab 12 can be formed in the state where first lead connection tab 12 is connected to connection region 32. Thus, when the lead plate is cut off at the position indicated by the dashed line in Fig. 4 from the state where first lead connection tab 12 of first lead plate 10 is secured to connection region 32 and some of secondary battery cells 1 are removed and replaced with new secondary battery cells 1 and new lead plates as shown in Fig. 9, it is possible to secure second lead connection tab 22 of second lead plate 20, which is the new lead plate, to a region within connection region 32 that does not overlap first lead connection tab 12 of old first lead plate 10, as illustrated in Fig. 11. As a result, as illustrated in Fig. 10, it is possible to construct battery pack 100' in which some of secondary battery cells are replaced. Battery pack 100' of Fig. 10 can continue to be used or can be reused by replacing some secondary battery cells 1 that have been deteriorated while effectively reusing battery holder 40 and circuit board 30 of battery pack 100 of Fig. 1.

In this case, it is preferable that the new lead plate be designed so that the lead connection tab is positioned in blank region 34. Second lead plate 20 is prepared as such a lead plate.

### Second Lead Plate 20

Second lead plate 20 includes second base part 21 and second lead connection tab 22 disposed on a portion of this second base part 21. Fig. 3 shows a plan view of second lead plate 20 overlapped with first lead plate 10. In this figure, second lead connection tab 22 is indicated by dashed line. Second base part 21 has the same shape as first lead plate 10. Second base part 21 forms the main surface of second lead plate 20, and is provided with a plurality of securing tabs 14 to be connected to end faces 1c of secondary battery cells 1, as with first base part 11.

### Second Lead Connection Tab 22

Second lead connection tab 22 is provided on a portion of the upper end of second base part 21. This second lead connection tab 22 is provided off-center so as not to overlap with the position corresponding to first lead connection tab 12 of first lead plate 10. In the plan view of Fig. 3, second lead connection tab 22 of second lead plate 20 is indicated by the dashed line. This configuration makes it possible to secure second lead connection tab 22 to a location different from first lead connection tab 12 when removing some of first lead plates 10 and replacing them with second lead plates 20, to thereby maintain connection reliability of second lead connection tab 22.

In the example of Fig. 3, second lead connection tab 22 is shifted to the right of first lead connection tab 12. This is because blank region 34 is disposed on the right of connection region 32, as illustrated in Fig. 4. This second lead connection tab 22 is connected to blank region 34, as illustrated in Fig. 11 and elsewhere. Thus, because first lead plate 10 is replaceable with second lead plate 20 and first lead connection tab 12 and second lead connection tab 22, which are connected to circuit board 30, are provided offset from each other, it is possible to secure second lead connection tab 22 to a position different from first lead connection tab 12, so that the reliability of connection can be maintained even when the lead plates are replaced.

It should be noted that not all of second lead plates 20 necessarily have the same shape, as with first lead plate 10, but may have varying shapes depending on their positions on lead mounting surface 42.

In addition, although the example of Fig. 10 shows the state in which all of first lead plates 10 have been replaced for the purpose of illustration, it is of course possible that only some of first lead plates 10 may be replaced. It is generally sufficient to replace only first lead plates 10 that are connected to deteriorated ones of secondary battery cells 1, and there is no need to replace first lead plates 10 that are connected only to usable ones of secondary battery cells 1.

### Cut-out 44

As illustrated in Figs. 4 and 11, the width of cut-out 44, which is formed in a portion of wall part 43 of battery holder 40, is set to greater than or equal to 1.7 times, preferably greater than or equal to 2 times, the width of first lead connection tab 12. Such a configuration allows the lead connection tab to be bent from lead mounting surface 42 to have access to board mounting surface 41 via cut-out 44, and to be secured to connection region 32 on circuit board 30 placed on board mounting surface 41. Moreover, because the width of cut-out 44 is made wider, an unused region is sufficiently provided even in the state where first lead plate 10 is secured. So, when a new lead plate is attached, it is allowed to have access from lead mounting surface 42 to board mounting surface 41 and to secure the lead connection tab of the new lead plate to connection region 32.

In addition, first lead connection tab 12 forms a gap between first lead connection tab 12 and circuit board 30 due to the position and thickness of connection region 32 in the state where it is bent from lead mounting surface 42 through cut-out 44 toward board mounting surface 41. Such a configuration can provide the advantage of making it easier to insert scissors, a cutter, nippers, or the like through the gap when cutting off first lead connection tab 12, to make it easier to cut the lead connection tab.

### Method for Replacing Secondary Battery Cells in Battery Pack

A battery pack according to the present exemplary embodiment can facilitate the work of replacing some of the secondary battery cells. As a result, in a battery pack in which only some of the secondary battery cells constituting the battery pack are unusable due to deterioration, it is possible to restore the battery pack into a usable condition by removing the deteriorated secondary battery cells and replacing them with new secondary battery cells. In particular, it is possible to reuse circuit boards and battery holders that are still usable to construct a new battery pack. Alternatively, it is also possible to reuse usable circuit boards when secondary battery cells that are still usable are collected from the secondary battery cells removed from the battery pack to reconstruct another battery pack. Such reusing of the components that constitute the battery pack is also called reconstruction of a battery pack in the present disclosure.

Here, the procedure of replacing some or all of the secondary battery cells in the reconstruction of a battery pack is described with reference to Figs. 1, 4, and 8 to 11. In replacing, secondary battery cells 1 that are to be replaced are identified in advance in battery pack 100 of Fig. 1. For example, the intermediate potential is measured through first lead connection tabs 12 to identify secondary battery cell 1 showing a low cell voltage. In this case, among secondary battery cells 1 connected to first lead plates 10, a group of secondary battery cells 1 connected in parallel are to be replaced. Hereinbelow, an example of replacing all of secondary battery cells 1 connected to first lead plate 10, for example, all the 6 cells connected to a middle one of first lead plates 10 in the examples shown in Fig. 1 and elsewhere, is described.

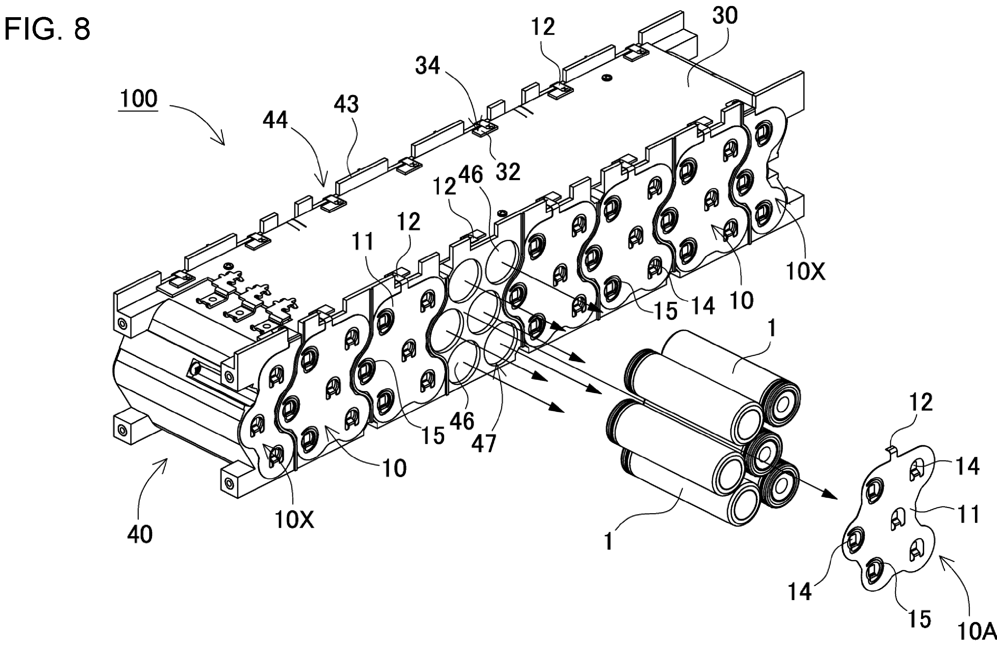

First lead plate 10 containing secondary battery cells 1 to be replaced is removed from battery pack 100 of Fig. 1. In the example shown in Fig. 8, it is shown that first lead plate 10A that is in the front of the figure is removed. Because all of the 6 secondary battery cells 1 connected to first lead plate 10A need to be removed, first lead plate 10 in the rear of the figure is removed likewise. In this example, because 3 secondary battery cells 1 are connected in parallel, 2 first lead plates 10 in the rear are to be removed.

In removing first lead plate 10A from lead mounting surface 42 of battery holder 40, first lead connection tab 12 is cut off. As indicated by dashed line in Fig. 4, first lead connection tab 12, which is bent and welded to connection region 32, is to be cut at the root of the base end. For the cutting, existing cutting tools, such as a cutter or a nipper, may be used.

For illustrative purposes, the example of Fig. 8 shows that first lead plate 10A is detached from end faces 1c of secondary battery cells 1, but this example is merely illustrative. It is also possible that the lead plate may be pulled off from lead mounting surface 42 while end faces 1c of secondary battery cells 1 are kept welded to first lead plate 10A.

In this way, secondary battery cells 1 to be replaced are extracted from battery holder 40. Under this condition, new secondary battery cells 1' are inserted into battery holder 40, and further, second lead plate 20 is welded thereto. In the example of Fig. 9, second lead plate 20 is welded to end face 1c of each of secondary battery cells 1' while secondary battery cells 1' are inserted. Further, as illustrated in Fig. 11, second lead connection tab 22 is welded to blank region 34 that is connection region 32 of circuit board 30 and that is free of first lead connection tab 12. Also at the rear of battery holder 40 in Fig. 9 as well, 2 second lead plates 20 are connected in place of the 2 first lead plates 10 that have been removed. In this way, as illustrated in Fig. 10, it is possible to reconstruct battery pack 100' in which some of secondary battery cells are replaced from battery pack 100 of Fig. 1. Although the example shown in Figs. 8 to 10 shows an example in which 6 secondary battery cells are replaced, the number of secondary battery cells to be replaced is not limited to this example but may be 5 or more, or 7 or more.

Herein, new secondary battery cells 1' may use brand-new secondary battery cells, but may also be used secondary battery cells that have been used in another battery pack but are still usable. In addition to the example of disassembling the battery pack to remove and reuse recyclable members when some of secondary battery cells or other components deteriorate, there may be cases, depending on the use of the battery pack, where the secondary battery cells are still usable in another use even when the battery pack reached its lifetime in a certain use, so it is also useful as the object of reusing of such secondary battery cells.

### Modified Example

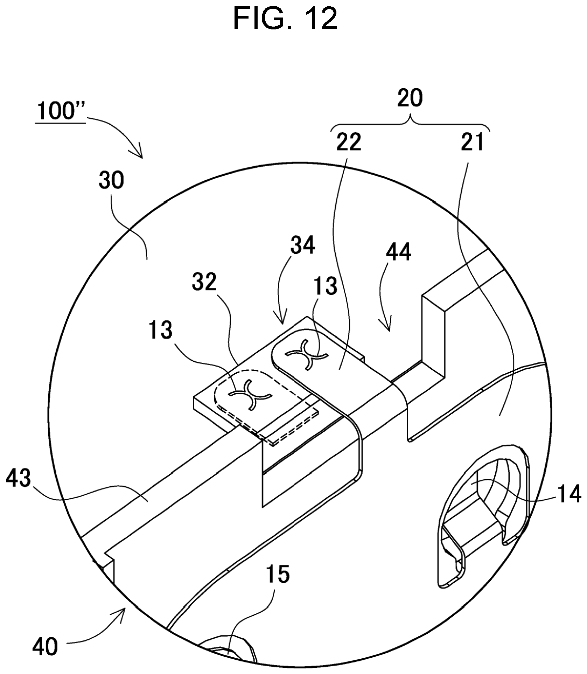

The foregoing example has described an example of reconstructing a battery pack while first lead connection tab 12 is left on connection region 32. The present disclosure is not limited to this configuration, and it is possible that the first lead connection tab may be removed from the connection region. Such an example is shown in Fig. 12 as battery pack 100" according to a modified example. In this figure, the same components as those in the above-described first exemplary embodiment and elsewhere are designated by the same reference symbols and the description thereof will not be repeated as appropriate.

A method for replacing secondary battery cells of battery pack 100" further includes the steps of cutting first lead connection tab 12 and thereafter removing first lead connection tab 12 from connection region 32. This provides battery pack 100" in which the configuration is further simplified by removing unnecessary members therefrom. In Fig. 12, the remaining portion of removed first lead connection tab 12 is indicated by dashed line. It is possible that X-shaped laser weld mark 13 may remain in connection region 32 even after the remaining portion of first lead connection tab 12 has been removed from connection region 32.

It is also possible to provide the step of peeling off first lead connection tab 12 from connection region 32, in place of the step of cutting first lead connection tab 12. This method may omit the cutting step or may alternatively combine the cutting step and the peeling step into one step, so that the manufacturing process can be simplified.

### Second Exemplary Embodiment

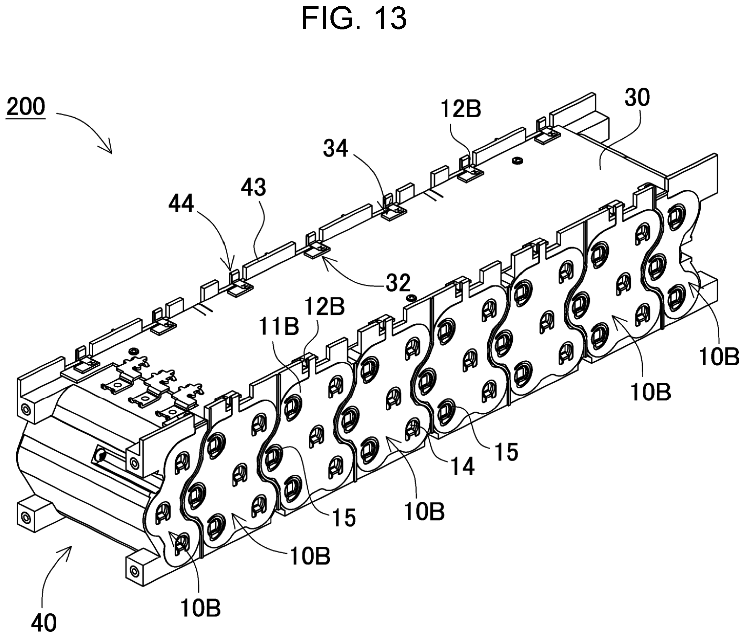

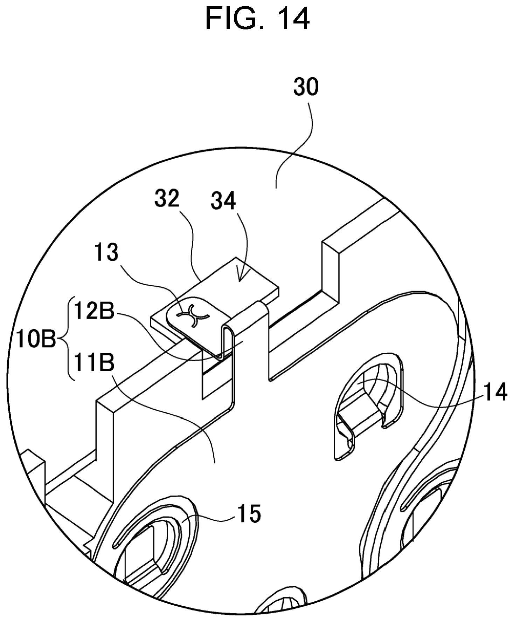

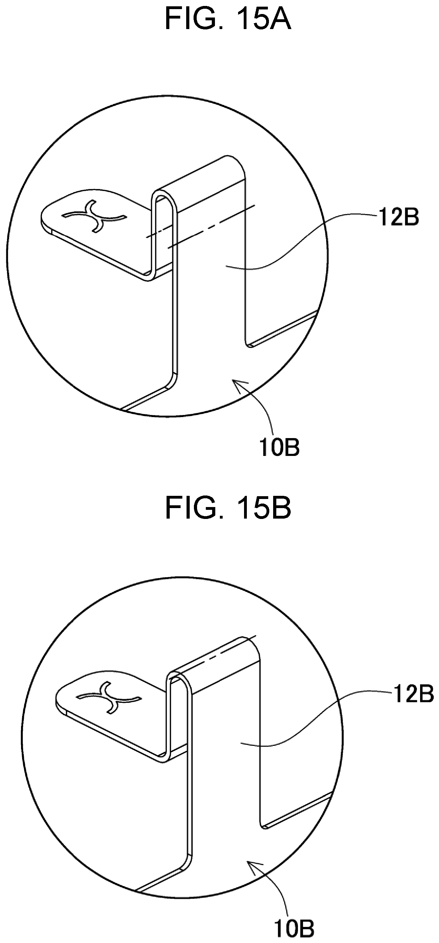

The shape of the first lead plate is not limited to the configuration in which the first lead plate is simply bent into an L-shape, as in the above-described embodiments such as the first exemplary embodiment, but may use other shapes that allow the first lead connection tab to be cut easily as appropriate. As an example, battery pack 200 according to a second exemplary embodiment is shown in Figs. 13 to 15B. In these drawings, Fig. 13 shows a perspective view illustrating battery pack 200 according to the second exemplary embodiment, Fig. 14 shows an enlarged perspective view illustrating a primary part of battery pack 200 of Fig. 13, Fig. 15A shows a schematic view illustrating an example of the position at which first lead connection tab 12B of Fig. 14 is to be cut, and Fig. 15B shows a schematic view illustrating another example of the position at which first lead connection tab 12B of Fig. 14 is to be cut. In these drawings, the same components as those in the above-described first exemplary embodiment and elsewhere are designated by the same reference symbols and the description thereof will not be repeated as appropriate.

In battery pack 200 according to the second exemplary embodiment, first lead connection tab 12B, provided at the upper end of first base part 11B of first lead plate 10B, is bent into a U-shape and is thereafter bent into an inverted L-shape, as illustrated in Fig. 14. Forming first lead connection tab 12B into an arch-like shape in this way provides the advantage of allowing scissors or a cutter to be easily inserted into a middle part of first lead connection tab 12B that is bent into a U-shape, and making it easier to perform the cutting work of first lead connection tab 12B. For example, as indicated by dash-dotted line in Fig. 15A, it is possible to bend first lead connection tab 12B into a U-shape and to cut it at a middle part where first lead connection tab 12B is separated into two pieces. Alternatively, as indicated by dash-dotted line in Fig. 15B, it is also possible to cut first lead connection tab 12B at its apex part, in other words, a portion thereof that is bent in a U-shape. Particularly, at this position, cutting can be effected at a position that is spaced from the circuit board, which can reduce the risk of causing unintended electrical conduction resulting from making the tip of a sharp-edged tool, such as scissors, contact with electrically conductive parts of the circuit board or the electrodes of the secondary battery cells.

In addition, in the foregoing examples, it is described that the direction in which the connection region is set to have a width that is 2 times the width of first lead connection tab 12B is a direction along the upper end of first lead plate 10B, a lateral direction in the figure, but the present disclosure is not limited to this configuration. It is also possible that the connection region may be extended in a direction orthogonal to the main surface of the first lead plate, that is, in a direction orthogonal to the first base part. In particular, by bending the first lead connection tab in an arch-like shape as illustrated in Fig. 14 and elsewhere, the second lead connection tab of the second lead plate can be arranged easily such that it can straddle over the remaining portion of the first lead connection tab that is secured to the connection region extended in a rearward direction from the lead mounting surface.

### Third Exemplary Embodiment

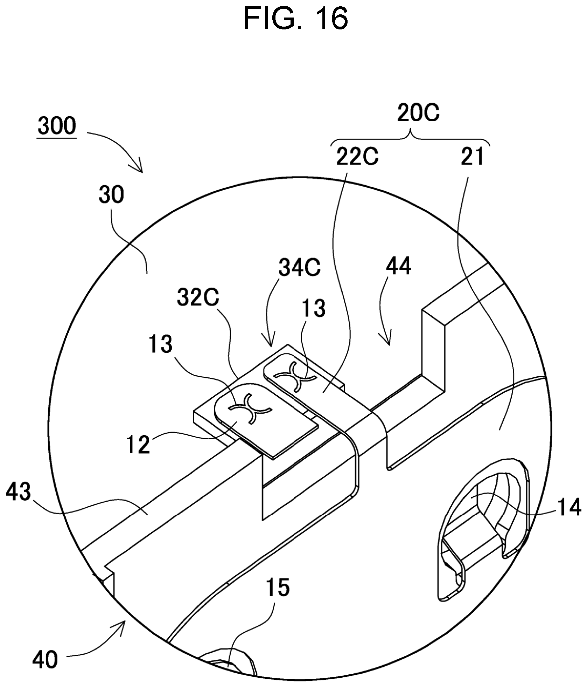

The foregoing exemplary embodiments have described examples in which the second lead connection tab of the second lead plate has substantially the same width as the first lead connection tab of the first lead plate. The present disclosure is, however, not limited to this configuration, and the width of the second lead connection tab may be formed narrower than the first lead connection tab. Such an example is shown in Fig. 16 as battery pack 300 according to a third exemplary embodiment. In this figure, the same components as those in the above-described first exemplary embodiment and elsewhere are designated by the same reference symbols and the description thereof will not be repeated as appropriate.

In battery pack 300 shown in Fig. 16, second lead connection tab 22C of second lead plate 20C is formed narrower than first lead connection tab 12 of first lead plate 10. This allows second lead connection tab 22C to be connected easier even when blank region 34C is made smaller, so connection region 32C itself can be formed narrow in width. On the other hand, when second lead connection tab 22C is made narrower than first lead connection tab 12, the electrical resistance increases correspondingly. For this reason, the width of second lead connection tab 22C is preferably within the range of 0.7 times to 1.0 times the width of first lead connection tab 12. It is also possible that the second lead plate may be made of a material having a higher electrical conductivity than the first lead plate or may be made thicker than the first lead plate, to thereby compensate for the decrease in electrical resistance that is caused by making the second lead plate narrower.

### Fourth Exemplary Embodiment

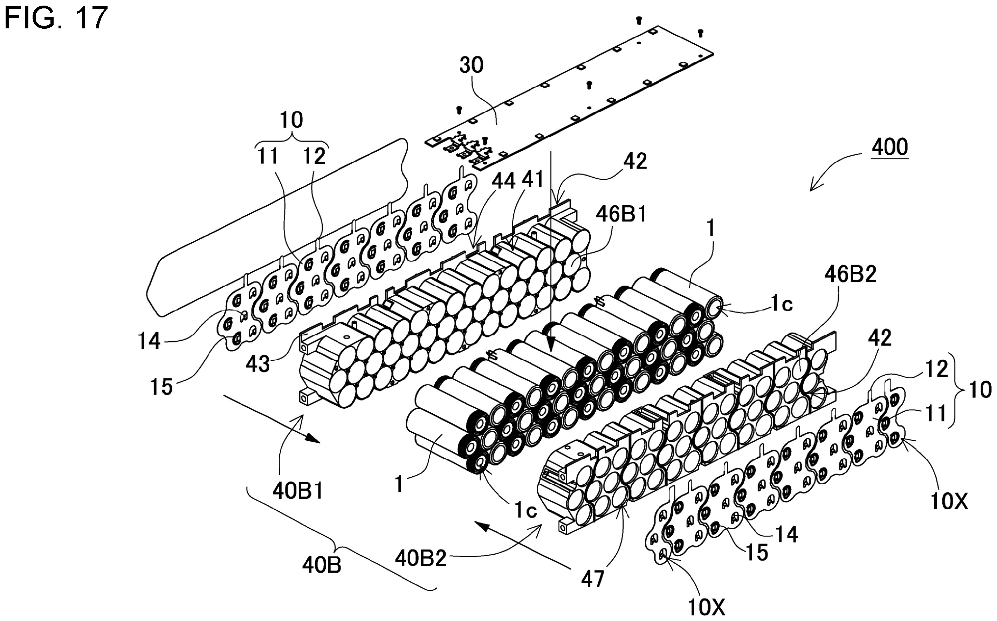

Furthermore, the foregoing exemplary embodiments have described embodiments in which battery holder 40 completely houses the outer covering can of secondary battery cell 1 in each of housing cylinders 46. The present disclosure is, however, not limited to these embodiments, but may employ an embodiment in which the battery holder is divided into a plurality of subholders, and the plurality of subholders are combined to cover the outer covering cans of the secondary battery cells. Such an example is shown in Fig. 17 as battery pack 400 according to a fourth exemplary embodiment. In this figure, the same components as those in the above-described first exemplary embodiment and elsewhere are designated by the same reference symbols and the description thereof will not be repeated as appropriate.

Battery pack 400 shown in Fig. 17 includes battery holder 40B divided into two subholders, first subholder 40B1 and second subholder 40B2, and first housing cylinders 46B1 formed in first subholder 40B1 and second housing cylinders 46B2 formed in second subholder 40B2 each have a length of approximately 1/2 the length of the outer covering cans of secondary battery cells 1. A plurality of secondary battery cells 1 are held by battery holder 40B so that secondary battery cells 1 are interposed between first housing cylinders 46B1 and second housing cylinders 46B2. When removing one of secondary battery cells 1, this structure allows the applicable secondary battery cell 1 to be extracted easily by removing one of the subholders, for example, first subholder 40B1, after removing first lead plate 10 on one of the sides.

### Fifth Exemplary Embodiment

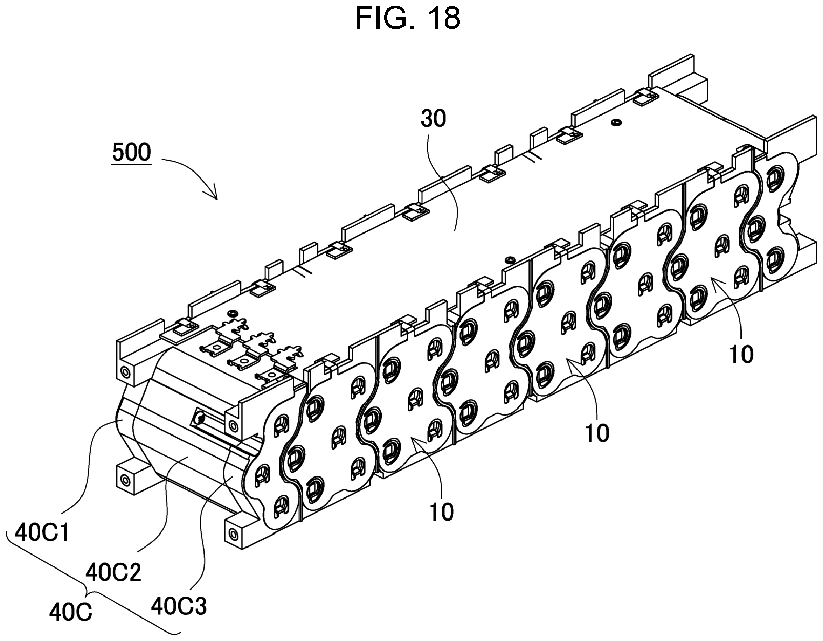

It is of course possible that the battery holder may be divided into not just two parts but three or more parts. As an example, a battery pack in which battery holder 40 is divided into 3 subholders is shown in Fig. 18 as battery pack 500 according to a fifth exemplary embodiment. In this figure, the same components as those in the above-described first exemplary embodiment and elsewhere are designated by the same reference symbols and the description thereof will not be repeated as appropriate.

Battery pack 500 shown in Fig. 18 includes battery holder 40C divided into three subholders, first subholder 40C1, second subholder 40C2, and third subholder 40C3. Second subholder 40C2 includes second housing cylinders for housing secondary battery cells, and the left and right ends of the second housing cylinders are open. In the state in which the secondary battery cells are housed in each of the second housing cylinders, the two end faces of the cylindrical secondary battery cells are partially exposed from the second housing cylinders. Under this condition, each of first subholder 40C1 and third subholder 40C3 covers a corresponding one of the end faces of the secondary battery cells. When removing one of secondary battery cells 1, battery holder 40C of this structure is able to access the applicable secondary battery cell 1 by removing one of the subholders, for example, first subholder 40C1, after removing first lead plate 10 on one of the sides, making it possible to grip near an end face of the secondary battery cell 1 and extract the secondary battery cell 1.

In the foregoing examples, the battery pack is fitted to an electrical device that is to be driven, to supply electric power thereto. When the remaining capacity of the battery pack has become low, or when the battery pack has deteriorated over time, the battery pack is replaced to be able to use the electrical device continuously. The present disclosure is, however, not limited to a replaceable-type battery pack that houses secondary battery cells therein, but may be also applicable to embodiments in which secondary battery cells are housed in a housing of an electrical device. In the present disclosure, it is sufficient that the battery pack houses secondary battery cells within a case, and the battery pack also means to include one in which secondary battery cells for driving are incorporated in the housing of the electrical device itself. In other words, the present disclosure is not limited to replaceable-type battery packs but is also applicable to electrical devices that incorporate secondary battery cells.

### INDUSTRIAL APPLICABILITY

The battery pack and the method for replacing a secondary battery cell thereof according to the present disclosure may be used suitably for a driving electric power supply for mobile bodies, such as electric carts and electric scooters. The battery pack and the method for replacing a secondary battery cell thereof according to the present disclosure may also be used appropriately for power sources for wireless devices and power sources for portable type electrical appliances, such as electric cleaners and electric power tools.

### REFERENCE MARKS IN THE DRAWINGS

- 100: battery pack

- 100': battery pack
- 100": battery pack
- 200: battery pack
- 300: battery pack
- 400: battery pack
- 500: battery pack
- 1, 1': secondary battery cell; 1c end face
- 10, 10A, 10B, 10X: first lead plate
- 11, 11B: first base part
- 12, 12B: first lead connection tab
- 13: laser weld mark
- 14: securing piece
- 15: fuse link
- 20, 20C: second lead plate
- 21: second base part
- 22, 22C: second lead connection tab
- 30: circuit board
- 32, 32C: connection region
- 34, 34C: blank region
- 40, 40B, 40C: battery holder
- 40B1: first subholder
- 40C1: first subholder
- 40B2: second subholder
- 40C2: second subholder
- 40C3: third subholder
- 41: board mounting surface
- 42: lead mounting surface
- 43: wall part
- 44: cut-out
- 46: housing cylinder
- 46B1: first housing cylinder
- 46B2: second housing cylinder
- 47: electrode window
- 600: battery pack
- 610: lead plate
- 612: upper end of lead plate 610
- 630: circuit board
- 632: connection region
- 640: battery holder

## Claims

1. A battery pack comprising:
a plurality of secondary battery cells each including an end face;
a battery holder housing the plurality of secondary battery cells;
a plurality of first lead plates connected to end faces of the plurality of secondary battery cells;
a first lead connection tab disposed in a portion of each of the plurality of first lead plates; and
a circuit board including a plurality of connection regions each connected to the first lead connection tab of a corresponding one of the plurality of first lead plates, wherein
each of the plurality of connection regions has a width greater than a width of the first lead connection tab; and
each of the plurality of connection regions includes a blank region that is connected to a second lead connection tab in a state where the first lead connection tab is connected to each of the plurality of connection regions, the second lead connection tab being different from the first lead connection tab.

2. A battery pack comprising:
a plurality of secondary battery cells each including an end face;
a battery holder housing the plurality of secondary battery cells;
a plurality of first lead plates connected to end faces of the plurality of secondary battery cells;
a first lead connection tab disposed in a portion of each of the plurality of first lead plates; and
a circuit board including a plurality of connection regions each connected to the first lead connection tab of a corresponding one of the plurality of first lead plates, wherein
each of the plurality of connection regions has a width of greater than or equal to 1.7 times a width of the first lead connection tab; and
each of the plurality of connection regions includes a blank region that is free of the first lead connection tab and that is wider than a width of the first lead connection tab, in a state where the first lead connection tab is connected to each of the plurality of connection regions.

3. The battery pack according to claim 2, further comprising:
a second lead plate connected to an end face of at least one of the plurality of secondary battery cells; and
a second lead connection tab disposed on a portion of the second lead plate, wherein
the second lead connection tab is disposed off-center so as not to overlap with a position corresponding to the first lead connection tab of a first lead plate, the first lead plate being each of the plurality of first lead plates, and
the second lead connection tab is connected to the blank region.

4. The battery pack according to claim 3, wherein
the first lead plate includes:
a first base part, and
the first lead connection tab disposed on a portion of the first base part,
the second lead plate includes:
a second base part, and
the second lead connection tab disposed on a portion of the second base part, and
the first base part and the second base part are identical in shape.

5. The battery pack according to claim 4, wherein the second lead connection tab is disposed off-center in the blank region.

6. The battery pack according to claim 4, wherein the second lead connection tab is narrower in width than the first lead connection tab.

7. The battery pack according to any one of claims 1 to 6, wherein
the battery holder includes:
a board mounting surface on which the circuit board is placed, the board mounting surface disposed on an upper surface of the battery holder, and
a lead mounting surface on which the first lead plate is disposed, the lead mounting surface disposed on a side surface of the battery holder,
the board mounting surface includes a wall part holding an edge of the circuit board,
the wall part includes a cut-out formed in a portion thereof and connecting to the lead mounting surface, and
the cut-out has a width of greater than or equal to 2 times a width of the first lead connection tab.

8. The battery pack according to claim 7, wherein a gap is formed between the first lead connection tab and the circuit board in a state where the first lead connection tab is bent toward the board mounting surface through the cut-out.

9. The battery pack according to any one of claims 1 to 6, wherein the first lead connection tab is secured to a connection region by laser welding, the connection region being each of the plurality of connection regions.

10. The battery pack according to claim 9, wherein at least a portion of the connection region includes a laser weld mark.

11. A method for replacing a secondary battery cell of a battery pack, comprising:
preparing a battery pack including:
a plurality of secondary battery cells each including an end face;
a battery holder housing the plurality of secondary battery cells;
a plurality of first lead plates each connected to end faces of the plurality of secondary battery cells;
a first lead connection tab disposed in a portion of each of the plurality of first lead plates; and
a circuit board including a plurality of connection regions each connected to the first lead connection tab of a corresponding one of the plurality of first lead plates, each of the plurality of connection regions having a width of greater than or equal to 1.7 times a width of the first lead connection tab;
cutting the first lead connection tab of at least one of the plurality of first lead plates;
removing the at least one of the first lead plates from the battery holder, and extracting, from the battery holder, one or more secondary battery cells connected to the at least one of the first lead plates among the plurality of secondary battery cells;
inserting another secondary battery cell into a portion of the battery holder from which the one or more secondary battery cells have been extracted to connect a second lead plate to an end face of the other secondary battery cell; and
connecting a second lead connection tab to a blank region that is wider than a width of the first lead connection tab of one of the plurality of connection regions and that is free of the first lead connection tab, the second lead connection tab being provided on a portion of the second lead plate, the second lead connection tab being disposed off-center so as not to overlap with a position corresponding to the first lead connection tab of the at least one of the first lead plates.

12. The method for replacing a secondary battery cell of a battery pack according to claim 11, the method further comprising:
cutting the first lead connection tab of at least one of the first lead plates to leave the blank region, and subsequently, removing a portion of the first lead connection tab remaining in one of the plurality of connection regions from the one of the plurality of connection regions.
